# EUROPÄISCHE PATENTSCHRIFT

(11) **EP 3 492 875 B1**
(45) Veröffentlichungstag und Bekanntmachung des Hinweises auf die Patenterteilung: **07.04.2021**
(21) Anmeldenummer: 18209717.0
(22) Anmeldetag: 03.12.2018
(51) Int. Cl.: G01D 11/30

(54) **DREHWINKELGEBER**
ROTARY ENCODER
CAPTEUR D'ANGLE DE ROTATION

(30) Priorität: 04.12.2017 DE 102017128667
(43) Veröffentlichungstag der Anmeldung: 05.06.2019
(73) Patentinhaber: TR Electronic GmbH, 78647 Trossingen (DE)
(72) Erfinder: KUNER, Christoph, 78647 Trossingen (DE); SCHLENKER, Mario, 78126 Königsfeld (DE)
(74) Vertreter: Patentanwälte und Rechtsanwalt Weiß, Arat & Partner mbB

(56) Entgegenhaltungen:
- EP-A2- 2 246 669
- DE-A1-102007 029 366
- DE-A1-102014 110 176
- DE-A1-102014 116 236

## Beschreibung

### Technisches Gebiet

Die Erfindung betrifft ein Drehwinkelgeber nach dem Oberbegriff des Anspruchs 1.

### Stand der Technik

Derartige Drehwinkelgeber sind bereits in vielfältiger Form und Ausgestaltung bekannt und gebräuchlich. So wird beispielsweise in der DE 10 2014 110 176 A1 ein Drehwinkelgeber mit einem opto - elektronischen Sensor offenbart.

Ein weiterer Drehwinkelgeber ist in der DE 10 2007 029366 A1 offenbart, wobei eine Geberwelle mit einem Läufer in Drehrichtung des Läufers nur in einer zahlenmäßig begrenzten, von der Anzahl der Polpaare abhängigen Anzahl unterschiedlicher Stellungen des Läufers in Bezug auf eine Geberwelle verbindbar sind.

Auch wird auf die DE 10 2014 116 236 A1 verwiesen, welche eine Sensoranordnung zum Einsatz in der Prozessautomatisierung beschreibt, wobei zwei Schnittstellen über mechanische Kupplungen verbindbar sind, wobei die zweite mechanische Kupplung in einem Winkel von kleiner als 180° zu einer Längsachse eines Kabelgehäuses angeordnet ist.

Weiter wird auf die EP 2 246 669 A2 hingewiesen. Dort ist ein kapazitiver Drehsensor zum Erfassen beschrieben, wobei an der Unterseite einer Leiterplatte eine Statorfläche angeordnet ist und dass der Statorfläche gegenüberliegend und durch den Luftspalt getrennt eine nichtrotationssymmetrische Rotorscheibe zugeordnet ist, die ihrerseits auf einem Rotorträger befestigt ist, welcher Rotorträger drehfest am Außenumfang der Welle hochgenau befestigt ist.

In der heutigen industriellen Welt erfolgt bei der Kupplung eines eigengelagerten Winkelkodierers an elektrische Antriebssysteme immer eine Anpassung der Hauptwelle des Winkelkodierers an die Motorwelle des zu überwachenden Prozesses. Die Kupplung wird durch geeignete Konstruktionselemente, zum Beispiel Kupplungen oder Klemmhülsen realisiert. Auf diese Weise können verschiedene Wellendurchmesser - Kombinationen aneinander angepasst werden. Im Allgemeinen handelt es sich bei der Ausführung der Hauptwelle um ein kundenspezifisches Konfigurationsmerkmal. So sind beispielsweise metrische und zöllige Wellenausführungen je nach Anwendung und Absatzmarkt gängig.

Eigengelagerte Winkelkodierer bestehen aus einer Hauptwelle, von welcher die Messgröße abgeleitet wird, die frei drehbar in einem Statorflansch gelagert ist, auf dem wiederum die Meßelektronik montiert wird. Die Montage der Winkelkodiererbaugruppen beginnt unter anderem mit der Montage der Lagerbaugruppen, d.h. der eigengelagerten Hauptwellen. Daraus folgt, dass zu einem frühen Zeitpunkt des Montageprozesses die Wellenausprägung d.h. der Durchmesser und die Ausführung der Hauptwelle festgelegt ist. Aus der Kombinatorik des Konfigurations- und Variantenmanagements ergeben sich eine Vielzahl von unterschiedlichen Baugruppen in Abhängigkeit der zugrunde liegenden Lagerbaugruppen.

Um die Anzahl unterschiedlicher Baugruppen zu verringern und um Montageprozesse zu vereinheitlichen, existieren unterschiedliche Ansätze. Eine gängige Lösung ist die eines Wechselwellensystems, bei dem die Lagerbaugruppe auf der Basis einer allgemeinen Hauptwelle aufgebaut wird. Die konkrete Wellenausprägung erfolgt zu einem späteren Zeitpunkt im Montageprozess, in dem eine Einsteckwelle in die Hauptquelle eingebracht wird, welche die konkrete Kundenanforderung an Wellendurchmesser und Länge erfüllt. Dies ermöglicht eine wesentliche Reduzierung unterschiedlicher Lagerbaugruppen und eine Vereinheitlichung der Fertigungsprozesse. Allerdings kommt es bei dieser Ausführung immer wieder zu Schlupf, was der Anwendung schadet.

Die Einsteckwelle wird gewöhnlich über einen passenden Konus zur Hauptwelle zentriert. Es existieren außerdem Lösungen, bei denen ein Formschluss zwischen Einstieg und Hauptwelle durch verstiften, z.B. durch einen Querstift hergestellt wird.

### Aufgabe der Erfindung

Die Aufgabe der vorliegenden Erfindung ist es, einen Drehwinkelsensor zur Verfügung zu stellen, welcher dem Hersteller eine größtmögliche Flexibilität zur Anpassung an verschiedenste Kundenwünsche und kleinste Bauserien zu ermöglichen. Dabei sollen Kosten und Zeit eingespart werden. Dabei sollen die Nachteile aus dem Stand der Technik abgestellt werden.

### Lösung der Aufgabe

Zur Lösung der Aufgabe führen die Merkmale nach dem Anspruch 1.

Vorteilhafte Ausgestaltungen sind in den Unteransprüchen beschrieben.

Zur Lösung der Aufgabe führt erfindungsgemäß, dass die Einsteckvollwelle oder die Einsteckhohlwelle jeweils einen Konus aufweisen, welche zur Zentrierung in der Winkelkodiererhauptwelle dienen. Gleichzeitig sind die Wellenenden wie Winkelkodiererkupplung und die Vierkantkupplung bzw. die Hohlwellenkupplung so konstruiert, dass die Einsteckvollwelle und die Steckhohlwelle mit der Winkelkodiererhauptwelle einen Formschluss aufweisen, der einen Schlupf der Einsteckvollwelle oder Einsteckhohlwelle bei angreifenden Drehmomenten verhindert. Der Formschluss ist soweit überdimensioniert, dass ein Fehler infolge mangelnder Festigkeit mit Sicherheit ausgeschlossen werden kann. Die vorliegende Erfindung kann bei allen sicherheitsbezogenen elektrischen, elektronischen und programmierbaren elektronischen Steuerungssystemen Anwendung finden. Dies gilt vor allem für elektrische Meß-, Steuer-, Regel- und Laborgeräte. Im Wesentlichen ist die vorliegende Erfindung bezogen auf elektrische Leistungsantriebssysteme mit einstellbarer Drehzahl. Sie dient vor allem bei der Anwendung von sicherheitstechnisch betrachteten integrierten Winkelkodierern und deren Zertifizierung für sicherheitsgerichtete Applikationen. Die Anwendungsfälle reichen vom Einsatz in sicheren Motor-Feedback-Systemen bis zur sicheren Drehzahl- und Lageüberwachung, wobei die Anwendung nicht ausschliesslich auf diesen Einsatz beschränkt sein soll.

Ein erfindungsgemäßer Drehwinkelgeber umfasst in der Regel eine Erfassungselektronik und eine Winkelkodiererhauptwelle. Daneben weisen erfindungsgemäße Drehwinkelgeber außerdem ein Gehäuse auf, welches mit einem Maschinenrahmen verbunden werden kann.

Die erfindungsgemäße Winkelkodiererhauptwelle ist eine Röhre. Die Röhre erlaubt ein Einstecken einer Einsteckvollwelle in die Winkelkodiererhauptwelle. Dazu wird die Einsteckvollwelle durch eine Einschuböffnung der Winkelkodiererhauptwelle eingeführt. Die Einschuböffnung ist einends der Winkelkodiererhauptwelle angeordnet, wobei andernends die Winkelkodiererkupplung ausgebildet ist. Die Winkelkodiererkupplung stellt in einem bevorzugten Ausführungsbeispiel in die Röhre reinragende Absätze dar. Diese reinragenden Absätze stellen die Winkelkodiererkupplung dar. Diese Winkelkodiererkupplung ist derart ausgebildet, dass sie mit einer Vierkantkupplung der Einsteckvollwelle eine kraft-/formschlüssige Verbindung eingehen kann.

Gleiches gilt auch für eine Einsteckhohlwelle. Die Einsteckhohlwelle weist eine Hohlwellenkupplung auf, welche ebenfalls mit der Winkelkodiererkupplung der Winkelkodiererhauptwelle kraft-/formschlüssig wirkverbindbar ist.

Wirkverbindbar bedeutet in diesem Zusammenhang, dass nach dem die Einsteckhohlwelle oder die Einsteckvollwelle in die Winkelkodiererhauptwelle eingeschoben wurden miteinander kraft-/formschlüssig gekoppelt werden und die Drehung der Winkelkodiererhauptwelle direkt auf die Einsteckhohlwelle oder die Einsteckvollwelle übertragen wird. Andersherum wird auch die Drehung der Winkelkodiererhauptwelle oder der Einsteckhohlwelle auf die Winkelkodiererhauptwelle direkt übertragen, ohne dass es dabei zu Schlupf kommen kann.

Die erfindungsgemäße Winkelkodiererhauptwelle besteht aus einer Hauptwellenröhre, wobei die Hauptwellenröhre einends die Einschuböffnung ausbildet und andernends die Winkelkodiererkupplung einen Kupplungssteg ausbildet. Regelmäßig besteht die Winkelkodiererkupplung aus einer Vielzahl von Kupplungsstegen, die L-förmig ausgebildet sind und von der Hohlwellenröhre wegragen. Dabei ragen sie andernends der Hohlwellenverjüngung von der Hohlwellenröhre weg.

Erfindungsgemäß bildet die Hauptwellenröhre ausserdem einen Hohlwellenring aus. Dieser Hohlwellenring kann unterschiedliche Aufgaben übernehmen. So ist beispielsweise eine bessere Lagerung der Winkelkodiererhauptwelle oder ein besseres Auslesen von Drehwinkeln möglich.

Erfindungsgemäß weist die Hauptwellenröhre eine Gewinderille auf. Die Gewinderillen sind vorteilhaft bezüglich der axialen Bewegung der Winkelkodiererhauptwelle. Diese Gewinderille verbessert ausserdem die Reproduzierbarkeit der Klebeverbindung zwischen Haupt- und Einsteckvoll- oder Einsteckhohlwelle, weil ein definierter abgeschlossener Klebespalt entsteht. Eine axiale RelativBewegung der Einsteckwelle zur Hauptwelle wird dadurch nachhaltig verhindert.

Die Einsteckvollwelle besteht aus einem Anschlussstück, einem Hohlwelleneinschub und einer Vollwellenverjüngung, wobei die Vollwellenverjüngung andernends des Hohlwelleneinschubs die Vierkantkupplung ausbildet. Dabei ist die Vollwellenverjüngung derart ausgebildet, dass der größte Durchmesser im Verbindungsbereich mit dem Hohlwelleneinschub vorhanden ist und die Verjüngung im Durchmesser hin zu der Vierkantkupplung abnimmt. Das Anschlussstück kann dabei je nach Kundenwunsch angepasst werden. So sind metrische, wie zöllige Maße ohne weiteres auf Vorrat herstellbar oder auf Bestellung schnell nachlieferbar.

Zwischen dem Anschlussstück und dem Hohlwelleneinschub ist eine Einkerbung eingebracht. Die Einkerbung dient dem einfacheren Anschluss und Betrieb von kundenspezifischen Teilen an das Anschlussstück.

Die Einsteckhohlwelle besteht aus einem Hohlwellenanschlussstück, einer Hohlwellenverjüngung und einer Hohlwellenröhre besteht, wobei die Hohlwellenröhre andernends der Hohlwellenverjüngung die Hohlwellenkupplung ausbildet, wobei die Hohlwellenkupplung den Kupplungssteg ausbildet. Das Hohlwellenanschlussstück dient dabei dem Einbringen eines kundenspezifisch vorausgesetzten Kupplungsteils einer beliebigen Vorrichtung. Die Hohlwellenverjüngung ist dabei so gestaltet, dass der Durchmesser von der Hohlwellenröhre hin zu dem Hohlwellenanschlussstück verringert. Die Hohlwellenröhre weist dabei einen durchgehend gleichen Durchmesser auf. Die Hohlwellenkupplung ist in einem bevorzugten Ausführungsbeispiel durch eine Vielzahl von einem bis sechs Kupplungsstegen ausgebildet, wobei jeder Kupplungssteg eine L-Form aufweist, wobei die kurze Kante der L- Form in den verlängerten Innendurchmesser der Hohlwellenröhre hineinragt.

Der Innendurchmesser der Winkelkodiererhauptwelle beträgt 8 - 16 mm, bevorzugt 16 mm. Durch diese Bemaßungen ist es kostengünstig denkbar einen überwiegenden Teil der benötigten kundenspezifischen Anschlussstücke bzw. Hohlwellenanschlussstücke abzudecken. Bevorzugte Einsteckwellenmaße sind 12mm, 10mm und 6mm.

Der Hohlwelleneinschub weist auf seiner Oberfläche Kleberillen auf. Oberfläche bedeutet hierbei, die im eingebauten Zustand zur Winkelkodiererhauptwelle anliegt. Die Kleberillen sind eingebrachte Gewindeschnitte. Durch die Kleberillen ist es möglich, dass die Einsteckvollwelle oder die Einsteckhohlwelle adhäsiv mit der Winkelkodiererhauptwelle verbunden werden können. Die Spaltmaße zwischen der Winkelkodiererhauptwelle und der Einsteckvollwelle oder der Einsteckhohlwelle sind derart gering, dass beim Einbringen eines Klebers regelmäßig der Kleber nach unten aus der Winkelkodiererhauptwelle herausgeschoben werden kann. Die Kleberillen fangen aber gerade in diesem Fall den Kleber auf und gewährleisten eine feste Verbindung zwischen der Winkelkodiererhauptwelle und der Einsteckvollwelle oder der Einsteckhohlwelle.

Die Einsteckvollwelle und die Einsteckhohlwelle weisen eine konvexe Form auf, damit sie in der Antriebshohlwelle beim Einschieben automatisch zentriert werden. Dabei ist die konvexe Form auf den Hohlwelleneinschub der Einsteckvollwelle oder die auf die Hohlwellenröhre der Einsteckhohlwelle ausgebildet.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen im Einzelnen:

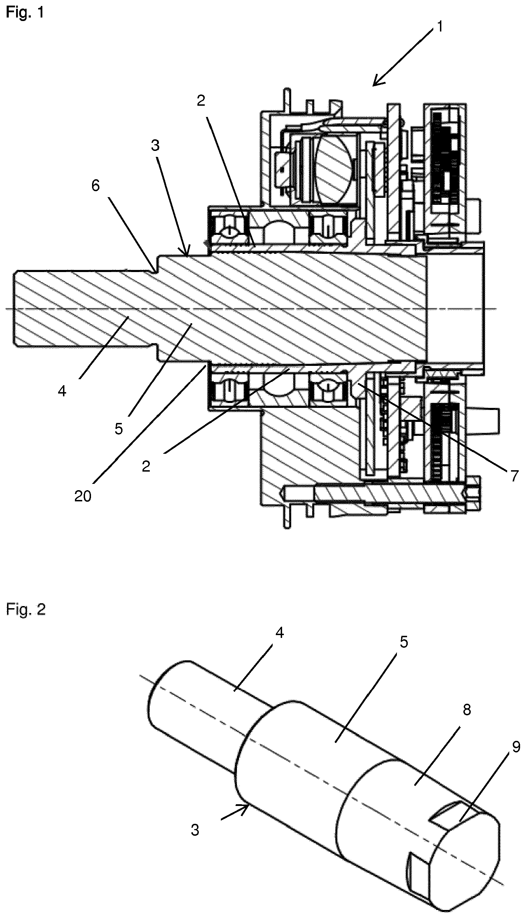

In der Figur 1 ist ein Teil eines Drehwinkelgeberteils 1 gezeigt. Die Figur 1 ist eine Schnittansicht. In der Schnittansicht ist gezeigt, wie eine Einsteckvollwelle 3 in einer Winkelkodiererhauptwelle 2 in Form einer Röhre eingeschoben ist. In diesem Zusammenhang ist auch ein Hohlwellenring 7 gezeigt, welcher als Teil der Winkelkodiererhauptwelle 2 von der Winkelkodiererhauptwelle 2 umfänglich abragt.

Weiter ist die Einsteckvollwelle 3 zwar einstückig, aber in mehrere Abschnitte unterteilt. So ist bspw. ein Anschlussstück 4, ein Hohlwelleneinschub 5 und ein in Figur 2 besser erkennbarer Bereich einer Vollwellenverjüngung 8 gegeben.

In Figur 2 ist auch gezeigt, wie die Vollwellenverjüngung 8 eine Vierkantkupplung 9 ausbildet. Die Vierkantkupplung 9 ist dabei andernends des Hohlwelleneinschubs 5 ausgebildet. Die Vollwellenverjüngung 8 verringert dabei ihren Durchmesser vom Verbindungsbereich des Hohlwelleneinschubs 5 mit der Vollwellenverjüngung 8 hin zu der Vierkantkupplung 9. Die Vierkantkupplung 9 besteht in erster Linie aus vier geraden Einfräsungen in den runden Körper der Vollwellenverjüngung 8.

Das Anschlussstück 4 ist dabei an kundenspezifische Wünsche anpassbar. In der Figur 1 ist lediglich eine einzige Möglichkeit des Anschlussstücks 4 gezeigt.

Zuletzt ist in der Figur 1 eine Einkerbung 6 zu erkennen, welche umfänglich zwischen dem Anschlussstück 4 und dem Hohlwelleneinschub 5 eingebracht ist.

In der Figur 3 ist eine Seitenansicht der Figur 2 gezeigt. Nachdem hier die gleichen Merkmale mit den gleichen Bezugsziffern offenbart sind, wie dies in der Figur 2 bereits der Fall war, wird auf weitere Ausführungen zur Figur 3 verzichtet.

Die Figur 4 zeigt eine Einsteckhohlwelle 10. Die Einsteckhohlwelle 10 besteht aus einem Hohlwellenanschlussstück 11, einer Hohlwellenverjüngung 12 und einer Hohlwellenröhre 13.

Die Hohlwellenröhre 13 weist einen durchgehend gleichen Innendurchmesser auf. Im Verbindungsbereich zwischen der Hohlwellenröhre 13 und der Hohlwellenverjüngung 12 weist die Hohlwellenverjüngung 12 den grössten Innendurchmesser auf. Anschliessend verjüngt sich die Hohlwellenverjüngung 12 hin zu dem Hohlwellenanschlussstück 11, wobei dies nur ein Ausführungsbeispiel darstellt und nicht zwingend notwendig ist.

Die Hohlwellenröhre 13 weist andernends der Hohlwellenverjüngung 12 eine Hohlwellenkupplung 14 auf. Diese Hohlwellenkupplung 14 wiederum zeigt eine Vielzahl von Kupplungsstegen 15, welche in sich eine L-Form aufweisen. Die L-Form der Kupplungsstege 15 ist so gestaltet, dass die kurze Kante der L-Form in einen verlängerten Innendurchmesser der Hohlwellenröhre 13 hineinragen.

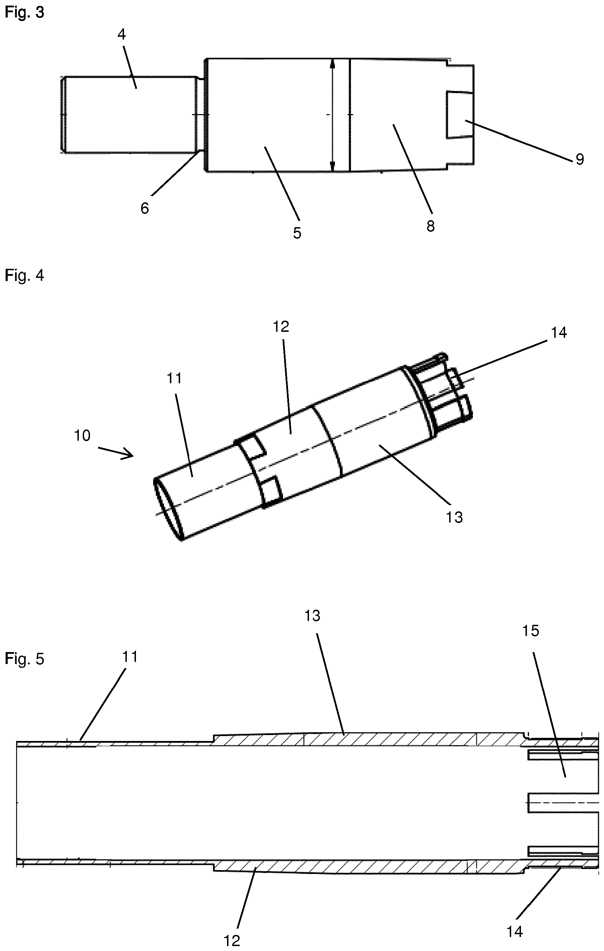

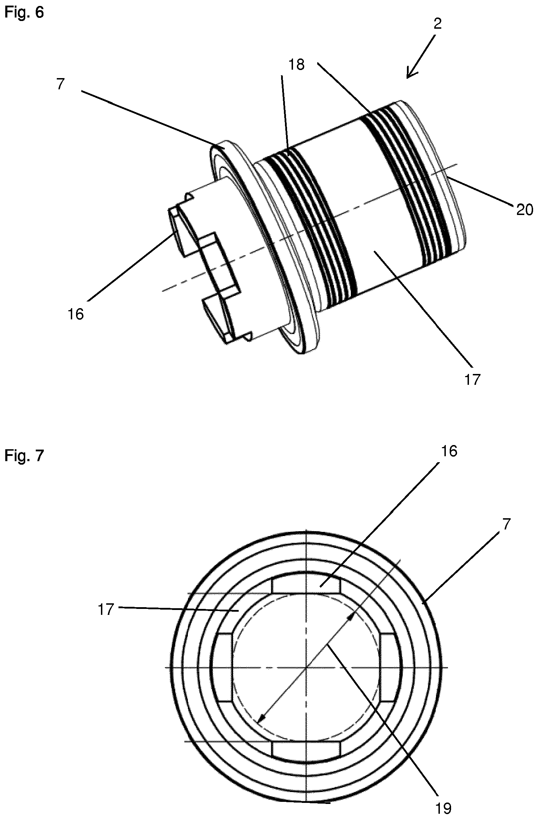

Figur 6 zeigt eine dreidimensionale Ansicht der Winkelkodiererhauptwelle 2 im ausgebauten Zustand. Dort ist zu erkennen, wie eine Hauptwellenröhre 17 zwei Gewinderillen 18 aufweist, wobei die Hauptwellenröhre 17 durch den Hohlwellenring 7 verläuft, welcher in vollem Umfang von der Hauptwellenröhre 17 abragt. Andernends der Einschuböffnung 20 bildet die Hauptwellenröhre 17 erfindungsgemäß eine Winkelkodiererkupplung 16 aus. Die Winkelkodiererkupplung 16 besteht wiederum aus vier Sockeln, die rechteckig in den verlängerten Innendurchmesser der Hauptwellenröhre 17 hineinragen. Dabei ist das Ausführungsbeispiel nach Figur 6 mit der Einsteckvollwelle 3 aus der Figur 3 kraft-/formschlüssig verbindbar, wenn die Einsteckvollwelle 3 durch die Einschuböffnung 20 in die Hauptwellenröhre 17 eingeschoben wird, bis die Vierkantkupplung 9 mit der Winkelkodiererkupplung 16 entsprechend wirkverbunden ist und eine Übertragung möglich ist.

Ein Innendurchmesser 19 der Winkelkodiererhauptwelle 2 beträgt in diesem Ausführungsbeispiel beträgt größer als oder gleich 12 mm. Das bedeutet in diesem Ausführungsbeispiel, dass sich maximale Einsteckhohlwellen mit 12 mm Innendurchmesser realisieren lassen. Dabei handelt es sich um eine bevorzugte Ausführungsform, da die allergrössten Kundenwünsche durch einen solchen Innendurchmesser abgedeckt werden können.

**Bezugszeichenliste**

| | | | | | |
|---|---|---|---|---|---|
| 1 | Drehwinkelgeberteil | 34 | | | |
| 2 | Winkelkodiererhauptwelle | 35 | | | |
| 3 | Einsteckvollwelle | 36 | | | |
| 4 | Anschlussstück | 37 | | | |
| 5 | Hohlwelleneinschub | 38 | | | |
| 6 | Einkerbung | 39 | | | |
| 7 | Hohlwellenring | 40 | | | |
| 8 | Vollwellenverjüngung | 41 | | | |
| 9 | Vierkantkupplung | 42 | | | |
| 10 | Einsteckhohlwelle | 43 | | | |
| 11 | Hohlwellenanschlussstück | 44 | | | |
| 12 | Hohlwellenverjüngunq | 45 | | | |
| 13 | Hohlwellenröhre | 46 | | | |
| 14 | Hohlwellenkupplung | 47 | | | |
| 15 | Kupplungssteg | 48 | | | |
| 16 | Winkelkodiererkupplung | 49 | | | |
| 17 | Hauptwellenröhre | 50 | | | |
| 18 | Gewinderille | 51 | | | |
| 19 | Innendurchmesser | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Drehwinkelgeber mit einer Erfassungselektronik und einer Winkelkodiererhauptwelle (2), wobei die Winkelkodiererhauptwelle (2) eine Röhre ist, wobei die Winkelkodiererhauptwelle (2) einends eine Einschuböffnung (20) und andernends eine Winkelkodiererkupplung (16) aufweist, wobei die Winkelkodiererkupplung (16) mit einer Vierkantkupplung (9) einer Einsteckvollwelle (3) oder einer Hohlwellenkupplung (14) einer Einsteckhohlwelle (10) kraft-/formschlüssig wirkverbindbar ist, wobei die Winkelkodiererhauptwelle (2) eine Hauptwellenröhre (17) aufweist, die eine Gewinderille (18) aufweist, wobei die Hauptwellenröhre (17) durch einen Hohlwellenring (7) verläuft, welcher als Teil der Winkelkodiererhauptwelle (2) in vollem Umfang von der Hauptwellenröhre (17) abragt, wobei andernends der Einschuböffnung (20) die Hauptwellenröhre (17) die Winkelkodiererkupplung (16) ausbildet, wobei die Winkelkodiererkupplung (16) wiederum aus vier Sockeln besteht, die rechteckig in den verlängerten Innendurchmesser der Hauptwellenröhre (17) hineinragen, wobei die Winkelkodiererhauptwelle (2) mit der Einsteckvollwelle (3) oder der Einsteckhohlwelle (10) kraft-/formschlüssig verbindbar ist, wenn die Einsteckvollwelle (3) oder die Einsteckhohlwelle (10) durch die Einschuböffnung (20) in die Hauptwellenröhre (17) eingeschoben ist, bis die Vierkantkupplung (9) oder die Hohlwellenkupplung (14) mit der Winkelkodiererkupplung (16) entsprechend wirkverbunden ist und eine Ubertragung möglich ist.

2. Drehwinkelgeber nach Anspruch 1, **dadurch gekennzeichnet, dass** die Winkelkodiererhauptwelle (2) aus einer Hauptwellenröhre (17) besteht, wobei die Hauptwellenröhre (17) einends die Einschuböffnung (20) ausbildet und andernends die Winkelkodiererkupplung (16) einen Kupplungssteg (15) ausbildet.

3. Drehwinkelgeber nach einem der vorigen Ansprüche, **dadurch gekennzeichnet, dass** die Einsteckvollwelle (3) aus einem Anschlussstück (4), einem Hohlwelleneinschub (5) und einer Vollwellenverjüngung (8) besteht, wobei die Vollwellenverjüngung (8) andernends des Hohlwelleneinschubs (5) die Vierkantkupplung (9) ausbildet.

4. Drehwinkelgeber nach Anspruch 3, **dadurch gekennzeichnet, dass** zwischen dem Anschlussstück (4) und dem Hohlwelleneinschub (5) eine Einkerbung (6) eingebracht ist.

5. Drehwinkelgeber nach einem der vorigen Ansprüche, **dadurch gekennzeichnet, dass** die Einsteckhohlwelle (10) aus einem Hohlwellenanschlussstück (11),
einer Hohlwellenverjüngung (12) und einer Hohlwellenröhre (13) besteht,
wobei die Hohlwellenröhre (13) andernends der Hohlwellenverjüngung (12) die Hohlwellenkupplung (14) ausbildet, wobei die Hohlwellenkupplung (14) den Kupplungssteg (15) ausbildet.

6. Drehwinkelgeber nach einem der vorigen Ansprüche, **dadurch gekennzeichnet, dass** der Innendurchmesser der Winkelkodiererhauptwelle (2) 8 - 14 mm, bevorzugt 12 mm beträgt.

7. Drehwinkelgeber nach einem der Ansprüche 3 bis 4, **dadurch gekennzeichnet, dass** der Hohlwelleneinschub (5) Kleberillen aufweist.

## Claims

1. Rotary encoder with a detection electronics and an angle encoder main shaft (2), the angle encoder main shaft (2) is a tube, whereby the angle encoder main shaft (2) has an insertion opening (20) at one end and an angle encoder coupling (16) at the other end, whereby the angle encoder coupling (16) is operatively connectable with a square coupling (9) of a solid insert shaft (3) or a hollow shaft coupling (14) of a insert hollow shaft (10) in a frictional/form-fit manner, whereby the angle encoder main shaft (2) has a main shaft tube (17) which has a thread groove (18), whereby the main shaft tube (17) extends through a hollow shaft ring (7) which projects fully from the main shaft tube (17) as part of the angle encoder main shaft (2), whereby at the other end of the insertion opening (20) the main shaft tube (17) forms the angle encoder coupling (16), whereby the angle encoder coupling (16) in turn consists of four sockets which project rectangular into the extended inner diameter of the main shaft tube (17), whereby the angle encoder main shaft (2) can be connected to the solid insert shaft (3) or the insert hollow shaft (10) in a frictional/form-fit manner when the insert solid shaft (3) or the insert hollow shaft (10) is inserted through the insertion opening (20) into the main shaft tube (17) until the square coupling (9) or the hollow shaft coupling (14) is correspondingly operatively connected to the angle encoder coupling (16) and transmission is possible.

2. Rotary encoder according to claim 1, **characterized in that** the angle encoder main shaft (2) consists of a main shaft tube (17), whereby the main shaft tube (17) at one end forms the insertion opening (20) and at the other end the angle encoder coupling (16) forms a coupling web (15).

3. Rotary encoder according to one of the previous claims, **characterized in that** the insert solid shaft (3) consists of a connecting piece (4), a hollow shaft insertion (5) and a solid shaft taper (8), whereby the solid shaft taper (8) forms the square coupling (9) at the other end of the hollow shaft insertion (5).

4. Rotary encoder according to claim 3, **characterized in that** a notch (6) is inserted between the connecting piece (4) and the hollow shaft insertion (5).

5. Rotary encoder according to one of the previous claims, **characterized in that** the insert hollow shaft (10) consists of a hollow shaft connector (11), a hollow shaft taper (12) and a hollow shaft tube (13), whereby the hollow shaft tube (13) forms the hollow shaft coupling (14) at the other end of the hollow shaft taper (12), whereby the hollow shaft coupling (14) forms the coupling web (15).

6. Rotary encoder according to one of the previous claims, **characterized in that** the inner diameter of the angle encoder main shaft (2) is 8 - 14 mm, preferably 12 mm.

7. Rotary encoder according to one of claims 3 to 4, **characterized in that** the hollow shaft insertion (5) has adhesive grooves.

## Revendications

1. Capteur d'angle de rotation avec une électronique de détection et un arbre principal de codeur angulaire (2),
dans lequel l'arbre principal de codeur angulaire (2) est un tube, dans lequel l'arbre principal de codeur angulaire (2) présente, à une extrémité, une ouverture d'insertion (20) et, à l'autre extrémité, un accouplement de codeur angulaire (16), dans lequel l'accouplement de codeur angulaire (16) peut être connecté de manière fonctionnelle en liaison de force/de forme à un accouplement carré (9) d'un arbre plein enfichable (3) ou d'un accouplement d'arbre creux (14) d'un arbre creux enfichable (10), dans lequel l'arbre principal de codeur angulaire (2) présente un tube d'arbre principal (17) qui présente une rainure filetée (18), dans lequel le tube d'arbre principal (17) passe à travers une bague d'arbre creux (7) qui, comme partie de l'arbre principal de codeur angulaire (2), fait entièrement saillie par rapport au tube d'arbre principal (17), dans lequel, à l'autre extrémité de l'ouverture d'insertion (20), le tube d'arbre principal (17) forme l'accouplement de codeur angulaire (16), dans lequel l'accouplement de codeur angulaire (16) est constitué, à son tour, de quatre socles qui pénètrent de manière rectangulaire dans le diamètre intérieur allongé du tube d'arbre principal (17), dans lequel l'arbre principal de codeur angulaire (2) peut être connecté en liaison de force/de forme à l'arbre plein enfichable (3) ou à l'arbre creux enfichable (10) lorsque l'arbre plein enfichable (3) ou l'arbre creux enfichable (10) est inséré à travers l'ouverture d'insertion (20) dans le tube d'arbre principal (17) jusqu'à ce que l'accouplement carré (9) ou l'accouplement d'arbre creux (14) soit connecté de manière fonctionnelle à l'accouplement de codeur angulaire (16) et que soit possible une transmission.

2. Capteur d'angle de rotation selon la revendication 1, **caractérisé par le fait que** l'arbre principal de codeur angulaire (2) est constitué d'un tube d'arbre principal (17), dans lequel le tube d'arbre principal (17) forme, à une extrémité, l'ouverture d'insertion (20) et, à l'autre extrémité, l'accouplement de codeur angulaire (16) forme une bretelle d'accouplement (15).

3. Capteur d'angle de rotation selon l'une des revendications précédentes, **caractérisé par le fait que** l'arbre plein enfichable (3) est constitué d'une pièce de raccordement (4), d'un insert d'arbre creux (5) et d'un effilement d'arbre plein (8), dans lequel l'effilement d'arbre plein (8) forme, à l'autre extrémité de l'insert d'arbre creux (5), le couplage carré (9).

4. Capteur d'angle de rotation selon la revendication 3, **caractérisé par le fait qu'**entre la pièce de raccordement (4) et l'insert d'arbre creux (5) est réalisée une encoche (6).

5. Capteur d'angle de rotation selon l'une des revendications précédentes, **caractérisé par le fait que** l'arbre creux enfichable (10) est constitué d'une pièce de raccordement d'arbre creux (11), d'un effilement d'arbre creux (12) et d'un tube d'arbre creux (13), dans lequel le tube d'arbre creux (13) forme, à l'autre extrémité de l'effilement d'arbre creux (12), l'accouplement d'arbre creux (14), dans lequel l'accouplement d'arbre creux (14) forme la bretelle d'accouplement (15).

6. Capteur d'angle de rotation selon l'une des revendications précédentes, **caractérisé par le fait que** le diamètre intérieur de l'arbre principal de codeur angulaire (2) est de 8 à 14 mm, de préférence de 12 mm.

7. Capteur d'angle de rotation selon l'une des revendications 3 à 4, **caractérisé par le fait que** l'insert d'arbre creux (5) présente des rainures adhésives.
